# EUROPEAN PATENT SPECIFICATION

(11) **EP 3 957 494 B1**
(45) Date of publication and mention of the grant of the patent: **19.02.2025**
(21) Application number: 21191620.0
(22) Date of filing: 17.08.2021
(51) Int. Cl.: B60C 1/00, C09J 109/06, C09J 161/12, C09J 109/08

(54) **RUBBER REINFORCEMENT ADHESIVE**
KAUTSCHUKVERSTÄRKUNGSKLEBSTOFF
ADHÉSIF DE RENFORCEMENT DE CAOUTCHOUC

(30) Priority: 18.08.2020 US 202016995863
(43) Date of publication of application: 23.02.2022
(73) Proprietor: The Goodyear Tire & Rubber Company, Akron, OH 44316 (US)
(72) Inventor: GILLICK, James Gregory, Akron, 44313 (US)
(74) Representative: Kutsch, Bernd

(56) References cited:
- US-A1- 2014 235 125
- US-A1- 2019 119 535
- GÜNTHER KAIN: "Design of Tree Bark Insulation Boards: Analysis of Material, Structure and Property Relationships", DISSERTATION, 1 December 2016 (2016-12-01), DE, pages 1 - 114, XP055510037, Retrieved from the Internet <URL:https://mediatum.ub.tum.de/doc/1343371/1343371.pdf>

## Description

### Background of the Invention

The use of resorcinol and formaldehyde in tire cord fiber adhesives has come under increasing scrutiny in recent years due to regulatory concerns. Recently, several different technologies have been proposed to eliminate the use of aqueous formaldehyde, resorcinol, and resorcinol/formaldehyde preformed resins for tire cord adhesives. See for example Gomes et al., "Adhesion Activation of Tire Textiles by Resorcinol Formaldehyde Free Coatings", Rubberworld.com, March 2016, pp 24-26. US2019119535 discloses a textile material capable of reinforcing tire structures, which is sized with an adhesive composition comprising a phloroglucinol-aldehyde resin.

### Summary of the Invention

The invention is directed to a rubber reinforcement adhesive in accordance with claim 1, to a reinforced rubber composition in accordance with claim 7, to a pneumatic tire in accordance with claim 10, and to a method in accordance with claim 11.

Dependent claims refer to preferred embodiments of the invention.

In a preferred aspect, the present invention is directed to a rubber reinforcement adhesive comprising phloroglucinol and tris(hydroxymethyl)nitromethane, a polymer cord reinforced rubber composition wherein the polymer cords are treated with the adhesive, and a tire comprising the polymer cord reinforced rubber composition. The polymer reinforcement cord directly contacts the rubber composition.

### Description of Example Embodiments of the Invention

There is disclosed a rubber reinforcement adhesive comprising phloroglucinol and tris(hydroxymethyl)nitromethane, a polymer cord reinforced rubber composition wherein the polymer cords are treated with the adhesive, a tire comprising the polymer cord reinforced rubber composition, and a method of making the tire.

In one embodiment, the adhesive includes the reaction product of phloroglucinol and tris(hydroxymethyl)nitromethane, otherwise referred to herein as a phloroglucinol-tris(hydroxymethyl)nitromethane resin.

In one embodiment, the adhesive includes the phloroglucinol-tris(hydroxymethyl)nitromethane resin, a styrene-butadiene copolymer latex, and a vinylpyridine-styrene-butadiene terpolymer latex.

In one embodiment, the adhesive includes the phloroglucinol-tris(hydroxymethyl)nitromethane resin, a styrene-butadiene copolymer latex, a vinylpyridine-styrene-butadiene terpolymer latex, and a blocked isocyanate.

The phloroglucinol is preferably dissolved in water to which tris(hydroxymethyl)nitromethane has been added together with a strong base such as sodium hydroxide. The strong base should generally constitute an amount sufficient to fully dissolve the phloroglucinol, and the molar ratio of the tris(hydroxymethyl)nitromethane to phloroglucinol should be in a range of from 0.5 to 1.5. The aqueous solution of the resole or condensation product or resin is mixed with the styrene-butadiene latex and vinylpyridine-styrene-butadiene terpolymer latex. The phloroglucinol- tris(hydroxymethyl)nitromethane reaction product should constitute from 5 to 40 parts and preferably 10 to 28 parts by solids of the latex mixture. The phloroglucinol- tris(hydroxymethyl)nitromethane reaction product should preferably be partially reacted or reacted so as to be soluble in water. Sufficient water is then preferably added to give 12 percent to 28 percent by weight overall solids in the final dip. The weight ratio of the polymeric solids from the latex to the phloroglucinol-tris(hydroxymethyl)nitromethane resin should be in a range of 2 to 6.

The adhesive may include a blocked isocyanate. In one embodiment from 1 to 8 parts by weight of solids of blocked isocyanate is added to the adhesive. The blocked isocyanate may be any suitable blocked isocyanate known to be used in adhesive dips including caprolactam blocked methylene-bis-(4-phenylisocyanate), such as Grilbond-IL6 available from EMS American Grilon, Inc., and phenol formaldehyde blocked isocyanates as disclosed in U.S. Patents 3,226,276; 3,268,467; and 3,298,984. As a blocked isocyanate, use may be made of reaction products between one or more isocyanates and one or more kinds of isocyanate blocking agents. The isocyanates include monoisocyanates such as phenyl isocyanate, dichlorophenyl isocyanate and naphthalene monoisocyanate, diisocyanate such as tolylene diisocyanate, dianisidine diisocyanate, hexamethylene diisocyanate, m-phenylene diisocyanate, tetramethylene diisocyante, alkylbenzene diisocyanate, m-xylene diisocyanate, cyclohexylmethane diisocyanate, 3,3-dimethoxyphenylmethane-4,4'-diisocyanate, 1-alkoxybenzene-2,4-diisocyanate, ethylene diisocyanate, propylene diisocyanate, cyclohexylene-1,2-diisocyanate, diphenylene diisocyanate, butylene-1,2-diisocyanate, diphenylmethane-4,4diisocyanate, diphenylethane diisocyanate, 1,5-naphthalene diisocyanate, etc., and triisocyanates such as triphenylmethane triisocyanate, diphenylmethane triisocyanate, etc. The isocyanate-blocking agents include phenols such as phenol, cresol, and resorcinol, tertiary alcohols such as t-butanol and t-pentanol, aromatic amines such as diphenylamine, diphenylnaphthylamine and xylidine, ethyleneimines such as ethylene imine and propyleneimine, imides such as succinic acid imide, and phthalimide, lactams such as ε.-caprolactam, δ-valerolactam, and butyrolactam, ureas such as urea and diethylene urea, oximes such as acetoxime, cyclohexanoxime, benzophenon oxime, and α-pyrolidon.

The polymers may be added in the form of a latex or otherwise. In one embodiment, a vinylpyridine-styrene-butadiene terpolymer latex and styrene-butadiene rubber latex is added to the adhesive. The vinylpyridine-styrene-butadiene terpolymer is preferably present in the adhesive such that the solids weight of the vinylpyridine-styrene-butadiene terpolymer is from 50 percent to 100 percent of the solids weight of the styrene-butadiene rubber; in other words, the weight ratio of vinylpyridine-styrene-butadiene terpolymer to styrene-butadiene rubber is from 1:2 to 2:1.

The adhesive may be used to treat a rubber reinforcement cord, otherwise known herein as a treated polymer cord.

The term "cord" means one or more of a reinforcing element, formed by one or more polymer filaments which may or may not be twisted or otherwise formed. Therefore, cords using the present invention may comprise from one (monofilament) to multiple filaments. Suitable cords are made from polymeric materials including rayon, nylon (polyamide), polyesters such as polyethylene terephthalate (PET), aramid, and hybrid cords formed from combinations of such yarns.

In one embodiment, the treatment of the polymer cord comprises treating the polymer cord with the adhesive comprising phloroglucinol- tris(hydroxymethyl)nitromethane resin and one or more elastomer latexes.

In a treatment step, the polymer cord is dipped in the adhesive. In one embodiment, the adhesive composition comprises (1) phloroglucinol, (2) tris(hydroxymethyl)nitromethane and (3) a styrene-butadiene (SBR) rubber latex, (4) a vinylpyridine-styrene-butadiene (PSBR) terpolymer latex, and optionally (5) a blocked isocyanate. The phloroglucinol reacts with tris(hydroxymethyl)nitromethane to produce a phloroglucinol-tris(hydroxymethyl)nitromethane reaction product.

The cord treated with the adhesive may be used as a reinforcement in a cord-reinforced rubber composition. In such a cord-reinforced rubber composition, the treated polymer reinforcement cord directly contacts a rubber composition. In this form, the treated polymer reinforcement cord includes the adhesive treatment dispersed on the surface of the cord by dipping the cord into the adhesive followed by drying, wherein the adhesive treatment includes the reaction product of phloroglucinol and tris(hydroxymethyl)nitromethane and any other solids from the adhesive, minus the water that has been removed by oven drying or other means.

The cord-reinforced rubber composition may be used in a belt structure, bead or carcass of a tire. "Belt structure" means at least two layers of plies of parallel cords, underlying the tread, unanchored to the bead and having both left and right cord angles preferably in the range from 17 to 27 degrees with respect to the equatorial plane (EP) of the tire. "Carcass" means the tire structure apart from the belt structure, the tread and the undertread but including the beads. The carcass ply includes reinforcing cords embedded in an elastomeric substance and that these components are considered to be a single entry. "Bead" means that part of the tire comprising an annular tensile member wrapped by the carcass ply and shaped, with or without other reinforcement elements such as flippers, chippers, apexes, toe guards, and chafers, to fit the design rim.

It is readily understood by those having skill in the art that the rubber compositions used in tire components would be compounded by methods generally known in the rubber compounding art, such as mixing the various sulfur-vulcanizable constituent rubbers with various commonly used additive materials such as, for example, curing aids, such as sulfur, activators, retarders and accelerators, processing additives, such as oils, resins including tackifying resins, silicas, and plasticizers, fillers, pigments, fatty acid, zinc oxide, waxes, antioxidants and antiozonants, peptizing agents and reinforcing materials such as, for example, carbon black and/or silica. As known to those skilled in the art, depending on the intended use of the sulfur vulcanizable and sulfur vulcanized material (rubbers), the additives mentioned above are selected and commonly used in conventional amounts.

The rubber composition may contain various conventional rubber additives. Typical additions of carbon black comprise 10 to 150 parts by weight of diene rubber (phr).

A number of commercially available carbon blacks may be used. Included in the list of carbon blacks are those known under the ASTM designations N299, S315, N326, N330, M332, N339, N343, N347, N351, N358, N375, N539, N550 and N582. Such processing aids may be present and can include, for example, aromatic, naphthenic, and/or paraffinic processing oils. Typical amounts of tackifying resins, such as phenolic tackifiers, range from 1 to 3 phr. Silica, if used, may be used in an amount of 10 to 150 phr, often with a silica coupling agent. Representative silicas may be, for example, hydrated amorphous silicas. Typical amounts of antioxidants comprise 1 to 5 phr. Representative antioxidants may be, for example, diphenyl-p-phenylenediamine, polymerized 1,2 dihydro 2,2,4 trimethylquinoline and others, such as, for example, those disclosed in the Vanderbilt Rubber Handbook (1990), Pages 343 through 362. Typical amounts of antiozonants comprise 1 to 5 phr. Representative antiozonants may be, for example, those disclosed in the Vanderbilt Rubber Handbook (1990), Pages 363 through 367. Typical amounts of fatty acids, if used, which can include stearic acid comprise 0.5 to 3 phr. Typical amounts of tin oxide comprise 2 to 10 phr. Typical amounts of waxes comprise 1 to 5 phr. Often microcrystalline waxes are used. Typical amounts of peptizers comprise 0.1 to 1 phr. Typical peptizers may be, for example, pentachlorothiophenol and dibenzamidodiphenyl disulfide.

The vulcanization is conducted in the presence of a sulfur vulcanizing agent. Examples of suitable sulfur vulcanizing agents include elemental sulfur (free sulfur) or sulfur donating vulcanizing agents, for example, an amine disulfide, polymeric polysulfide or sulfur olefin adducts. Preferably, the sulfur vulcanizing agent is elemental sulfur. As known to those skilled in the art, sulfur vulcanizing agents are used in an amount ranging from 0.5 to 5 phr, or even, in some circumstances, up to 8 phr, with a range of from 3 to 5 being preferred.

Accelerators are used to control the time and/or temperature required for vulcanization and to improve the properties of the vulcanizate. In one embodiment, a single accelerator system may be used, i.e., primary accelerator. Conventionally, a primary accelerator is used in amounts ranging from 0.5 to 2.5 phr. In another embodiment, combinations of two or more accelerators which is generally used in the larger amount (0.5 to 2.0 phr), and a secondary accelerator which is generally used in smaller amounts (0.05 to 0.50 phr) in order to activate and to improve the properties of the vulcanizate. In addition, delayed action accelerators may be used which are not affected by normal processing temperatures but produce satisfactory cures at ordinary vulcanization temperatures. Suitable types of accelerators that may be used in the present invention are amines, disulfides, guanidines, thioureas, thiazoles, thiurams, sulfenamides, dithiocarbamates and xanthates. Preferably, the primary accelerator is a sulfenamide. If a second accelerator is used, the secondary accelerator is preferably a guanidine, dithiocarbamate or thiuram compound.

The tire can be built, shaped, molded and cured by various methods which will be readily apparent to those having skill in such art. For example, the polymer cord reinforced rubber composition may be produced by calendaring of the cords into a rubber extrudate.

The invention is further illustrated by the following examples.

### Examples

The following examples illustrate the production and use of resorcinol-formaldehyde free adhesives as treatments for tire reinforcing cords.

### Resorcinol alternatives

The following commercially available materials were evaluated as resorcinol alternatives:
Phloroglucinol (1,3,5-trihydroxybenzene)
Morin (2',3,4',5,7-Pentahydroxyflavone)
Sesamol (3,4-Methylenedioxyphenol)
Tannic Acid

### Formaldehyde alternatives

The following commercially available materials were evaluated as formaldehyde alternatives:
Sodium hydroxymethylsulfinate
Trishydroxymethylnitromethane
Zoldine LH1000, which is a commercial product of Angus Chemical and likely a bis-oxazolidine modified to be water soluble
Furfural (furan-2-carboxaldehyde)
Salicylaldehyde (o-hydroxybenzaldehyde)
p-Anisaldehyde (p-methoxybenzaldehyde)
Vanillin (4-hydroxy-3-methoxybenzaldehyde)
p-Nitrobenzaldehyde

### Example 1

### Adhesive Preparation

The general approach taken was to replicate as closely as possible the degree of resin crosslinking developed by a formaldehyde to resorcinol molar ratio (1.7) used in a standard RFL adhesive. In some cases, direct replacement of formaldehyde or resorcinol on a molar basis led to unstable adhesives which coagulated during aging because of the significantly higher molecular weights of the alternative components. In those cases, the latex to resin dry weight mass ratio was adjusted to be at least 3.0 (vs 5.7 for standard RFL). The same latex blend (50:50 PSBR:SBR) was used as in the standard RFL. The amount of sodium hydroxide used had to be increased when using phloroglucinol because the solubility of phloroglucinol in water is 100 times less than that of resorcinol. Undissolved phloroglucinol particles in the initial attempt at resin preparation led to immediate coagulation on addition of latex. To prevent this the sodium hydroxide level was increased to a 1:1 molar ratio, which resulted in formation of a clear solution prior to the addition of aldehydes and latex. The same high base content was subsequently used with other formulations as well to ensure complete solution of the resin base.

The standard procedure used for adhesives preparation was to start by dissolving the resorcinol alternative in water. All resorcinol alternatives except for resorcinol required the addition of 10% sodium hydroxide solution to completely to achieve a clear solution. The formaldehyde alternative was then added, and the solution was stirred at room temperature for at least 4 hours prior to latex addition. This delayed latex addition is not normally required for the standard RFL but is commonly used with ammoniated RFL adhesives to ensure reaction of the formaldehyde prior to introduction of ammonia stabilized latex. In these experiments the same delay of latex addition was used for the standard RFL adhesive with no adverse effects on adhesion. Delaying the latex addition also allowed for easier assessment of changes in the resin solution during the initial stages of reaction.

RF resins generally exhibit an intense red color which starts to form almost immediately after combining resorcinol, formaldehyde, and a base such as sodium hydroxide. The initial color has been ascribed to formation of an ortho-quinone methide intermediate, but the color in the later stages has been identified as deriving from subsequent oxidation products including p-quinones (see T L Huber et al, "Chemical Derivation to Enhance the Chemical/Oxidative Stability of Resorcinol-Formaldehyde (R-F) Resin", Report to the US Department of Energy under Contract DE-AC05-76-RLO 1830, September 1996.) The formation of a red color thus provides a qualitative indicator of reaction.

Formulations evaluated are shown in Tables I-III. The amounts listed are the dry weight proportions of the adhesives, which were all formulated to 18% solids in water for use in cord dipping. Values were rounded to one decimal place to reflect the precision of the scale used in preparing the adhesives. Note that in some cases multiple formulations for the same components are shown with different proportions. This was to address issues found in initial adhesive preparation or the explore on a limited basis the effect of changing proportions. Comments about the physical appearance of the adhesive during and after aging are included where appropriate. Unless otherwise noted all adhesives developed a reddish-brown color to some degree during 24-hour adhesive aging.

**Table I**

| Resorcinol Replacements | | | | | | | |
|---|---|---|---|---|---|---|---|
| Ingredient | RFL Contr ol | Phloroglucinol 1^{st} Version * | Phloroglucinol 2^{nd} Version | Tannic Acid | Tannic Acid + Phloroglucinol | Morin | Sesamol |
| Resorcinol | 9.4 | | | | | | |
| Phloroglucinol | | 10.8 | 10.4 | | 1.1 | | |
| Tannic Acid | | | | 14.5 | 13.1 | | |
| Morin | | | | | | 12.2 | |
| Sesamol | | | | | | | 11.2 |
| Sodium Hydroxide | 1.1 | 1.1 | 3.3 | 1.1 | 1.1 | 3.2 | 3.2 |
| Formaldehyde | 4.4 | 4.4 | 4.3 | 4.4 | 4.4 | 4.2 | 4.2 |
| PSBR | 42.5 | 42.5 | 41.0 | 40.0 | 40.0 | 40.2 | 40.6 |
| SBR | 42.5 | 42.5 | 41.0 | 40.0 | 40.0 | 40.2 | 40.6 |
| | | | | | | | |
| Latex/Resin Ratio | 5.7 | 5.2 | 4.6 | 4.0 | 4.1 | 4.1 | 4.3 |
| Donor/Acceptor Molar Ratio | 1.7 | 1.7 | 1.7 | 1.7 | 1.7 | 1.7 | 1.7 |
| NaOH/Acceptor Molar Ratio | 0.3 | 0.3 | 1.0 | 0.3 | 0.3 | 1.0 | 1.0 |

| | | | | | | | |
|---|---|---|---|---|---|---|---|
| * Phloroglucinol did not fully dissolve, and latex coagulated on addition to resin mixture | | | | | | | |

**Table II**

| Formaldehyde Replacements | | | | | | |
|---|---|---|---|---|---|---|
| Ingredient | RFL Control | Sodium Hydroxymet hyl Sulfinate * | Tris (hydroxymethyl ) nitromethane 1^{st} Version | Tris (hydroxymethyl ) nitromethane 2^{nd} Version | Tris (hydroxymethyl ) nitromethane Phloroglucinol | LH 1000 |
| Resorcinol | 9.4 | 8.1 | 9.1 | 8.3 | | 6.7 |
| Phloroglucinol | | | | | 9.5 | |
| Sodium Hydroxymethyl Sulfinate | | 17.2 | | | | |
| Tris(hydroxymethyl) nitromethane | | | 7.2 | 14.5 | 12.1 | |
| LH1000 | | | | | | 15.3 |
| Sodium Hydroxide | 1.1 | 0.98 | 1.1 | 3.0 | 3. | 2.3 |
| Formaldehyde | 4.4 | | | | | |
| PSBR | 42.5 | 36.8 | 41.3 | 37.7 | 37.7 | 37.8 |
| SBR | 42.5 | 36.8 | 41.3 | 37.7 | 37.7 | 37.8 |
| | | | | | | |
| Latex/Resin Ratio | 5.7 | 2.8 | 4.7 | 3.1 | 3.1 | 3.1 |
| Donor/Acceptor Molar Ratio | 1.7 | 1.7 | 0.6 | 1.3 | 1.1 | 1.0 |
| NaOH/Acceptor Molar Ratio | 0.3 | 0.3 | 0.3 | 1.0 | 1.0 | 1.0 |

| | | | | | | |
|---|---|---|---|---|---|---|
| * Adhesive showed no color formation during resin aging and developed an opaque white appearance after latex addition | | | | | | |

**Table III**

| Alternative Aldehydes | | | | | | | |
|---|---|---|---|---|---|---|---|
| Ingredient | Furfural | Salicylal dehyde * | Vanillin 1^{st} Version ** | Vanillin 2^{nd} Version *** | Vanillin 3^{rd} Version | p-Nitrobenzalde hyde | p-Anisaldehy de |
| Resorcinol | 8.6 | 8.3 | 8.0 | 7.8 | 4.0 | 5.3 | 5.4 |
| Sodium Hydroxide | 1.0 | 1.0 | | 2.8 | 1.4 | 1.9 | 2.0 |
| Furfural | 13.0 | | | | | | |
| Salicylaldehyde | | 15.9 | | | | | |
| Vanillin | | | 19.0 | 18.7 | 9.5 | | |
| p-Nitrobenzaldehyde | | | | | | 12.7 | |
| p-Anisaldehyde | | | | | | | 11.3 |
| PSBR | 38.7 | 37.4 | 36.0 | 35.3 | 42.5 | 40.0 | 40.6 |
| SBR | 38.7 | 37.4 | 36.0 | 35.3 | 42.5 | 40.0 | 40.6 |
| | | | | | | | |
| Latex/Resin Ratio | 3.4 | 3.0 | 2.6 | 2.4 | 5.7 | 4.0 | 4.4 |
| Donor/Acceptor Molar Ratio | 1.7 | 1.7 | 1.7 | 1.7 | 1.7 | 1.7 | 1.7 |
| NaOH/Acceptor Molar Ratio | 0.3 | 0.3 | 0.3 | 1.0 | 1.0 | 1.0 | 1.0 |

| | | | | | | | |
|---|---|---|---|---|---|---|---|
| *Separate phase formed but adhesive remained stable with stirring **Vanillin did not completely dissolve, and adhesive coagulated after latex addition ***Vanillin dissolved but adhesive coagulated during aging after latex addition | | | | | | | |

### Example 2

Three cords were chosen to conduct adhesive screening: 1840/1/2 rayon, 1400/1/2 nylon 6,6, and 1670/1/2 PET. Standard process conditions were used as shown for reference purposes in Table IV. No attempt was made to optimize the processes for adhesive changes.

**Table IV**

| Cord Process Conditions | | | |
|---|---|---|---|
| | Rayon | Nylon | PET |
| Dip 1 | RFL¹, 18% Solids | RFL¹, 18% Solids | Subcoat² |
| Oven 1, F | 360 | 280 | 280 |
| Oven 2, F | 360 | 410 | 480 |
| 1^{st} Zone Tension, lbs | 1.0 | 2.1 | 3.0 |
| Dip 2 | None | None | RFL¹, 18% Solids |
| Oven 3, F | 360 | 280 | 280 |
| Oven 4, F | 360 | 450 | 480 |
| 2^{nd} Zone Tension, lbs | 1.0 | 4.0 | 1.0 |
| Exposure Time | 60 secs in each oven | 60 secs in each oven | 60 secs in each oven |

| | | | |
|---|---|---|---|
| ¹RFL control RFL from Tables I & II ²A combination of epoxy/blocked isocyanate resins in water similar to that disclosed in US 3,307,966 | | | |

Adhesion results are tabulated in Tables V-VII. A wide range of adhesion forces and coverage were found, and in some cases different levels of performance were seen for the same adhesives with different fibers. This could either reflect differences in fiber/adhesive interaction or differences in the response of the adhesive to process conditions, which vary based on material type. Strip adhesion samples that exhibited pull-through due to extremely low adhesion are marked as "Failed".

**Table V**

| Hot U Adhesion' to Standard Reference Compound² | | | |
|---|---|---|---|
| Adhesive | Rayon Pullout Relative Force | Nylon Pullout Relative Force | PET Pullout Force, Relative Force |
| Control RFL | 100 | 100 | 100 |
| Phloroglucinol 2^{nd} Version | 104 | 95 | 105 |
| Tannic Acid | 33 | 26 | 71 |
| Tannic Acid/Phloroglucinol | 53 | 35 | 105 |
| Morin | 97 | 91 | 100 |
| Sesamol | 24 | 21 | 27 |
| Sodium Hydroxymethyl Sulfinate | 46 | 30 | 44 |
| Tris (Hydroxymethyl) nitromethane 1^{st} Version | 87 | 83 | 115 |
| Tris (Hydroxymethyl) nitromethane 2^{nd} Version | 89 | 85 | 91 |
| Tris (Hydroxymethyl) nitromethane/Phloroglucinol | 111 | 121 | 102 |
| LH1000 1 Day Aged | 96 | 43 | 39 |
| LH1000 5 Day Aged | 108 | 44 | 35 |
| LH1000 11 Day Aged | 109 | 44 | 45 |
| Furfural | 100 | 91 | 104 |
| Salicylaldehyde | 46 | 41 | 94 |
| Vanillin 3^{rd} Version | 61 | 31 | 58 |
| p-Nitrobenzaldehyde | 56 | 68 | 94 |
| p-Anisaldehyde | 31 | 30 | 70 |

| | | | |
|---|---|---|---|
| ¹ Hot U Adhesion determined by ASTM D4777-88 ² Goodyear reference compound used for fabric release testing | | | |

**Table VI**

| Rayon Strip Adhesion' to Standard Carcass Ply Rubber Compounds² | | | |
|---|---|---|---|
| Adhesive | Plycoat 1 Relative Force/ RC rating (0-5 scale) | Plycoat 2 Relative Force/ RC rating (0-5 scale) | Plycoat 3 Relative Force/ RC rating (0-5 scale) |
| Control RFL | 100/4.5 | 100/4 | 100/2 |
| Phloroglucinol 2^{nd} Version | 75/3 | 70/3 | 81/1 |
| Tannic Acid | 36/0 | | |
| Tannic Acid/Phloroglucinol | 34/0 | | *70*/*0* |
| Morin | 82/3.5 | 71/3 | 91/2.5 |
| Sesamol | 44/0 | Failed | Failed |
| Sodium Hydroxymethyl Sulfinate | 24/0 | 50/0 | |
| Tris (Hydroxymethyl) nitromethane 1^{st} Version | 49/1 | | |
| Tris (Hydroxymethyl) nitromethane 2^{nd} Version | 94/5 | 86/4 | 110/3 |
| Tris (Hydroxymethyl) nitromethane/Phloroglucinol | 84/5 | 96/4.5 | 100/2.5 |
| LH1000 1 Day Aged | 70/2 | *77*/*1* | 84/1 |
| LH1000 5 Day Aged | 69/3 | 72/1 | 81/1 |
| LH1000 11 Day Aged | 67/4 | *75*/*1* | 80/1 |
| Furfural | 70/3 | 69/2 | |
| Salicylaldehyde | 59/2 | 66/1 | |
| Vanillin 3^{rd} Version | 32/0 | 52/0 | 73/0 |
| p-Nitrobenzaldehyde | 37/0 | 53/0 | 58/0 |
| p-Anisaldehyde | 39/0 | *78*/*0* | 100/2.5 |

| | | | |
|---|---|---|---|
| ¹ Strip adhesion determined by a variation of ASTM D4393 Strap Peel Adhesion Test ² Standard rubber ply compounds: Plycoat 1 and 2 are standard passenger plycoats, Plycoat 3 is the same reference compound used for Hot U testing in Table V | | | |

**Table VII**

| Nylon Strip Adhesion to Standard Carcass Ply Rubber Compounds' | | | | |
|---|---|---|---|---|
| Adhesive | Plycoat Relative Force/ RC rating (0-5 scale) 4 5 | Plycoat 5 Relative Force/ RC rating (0-5 scale) | Plycoat 6 Relative Force/ RC rating (0-5 scale) | Plycoat 3 Relative Force/ RC Rating (0-5 Scale) |
| Control RFL | 100/5 | 100/3 | 100/4 | 100/4.5 |
| Phloroglucinol 2^{nd} Version | 74/4.5 | 64/0 | 88/1 | 76/2.5 |
| Tannic Acid | 19/0 | 74/0 | 35/0 | |
| Tannic Acid/Phloroglucinol | 19/0 | Failed | 52/0 | |
| Morin | 76/3.5 | 54/0 | 77/1 | 76/2.5 |
| Sesamol | 25/0 | Failed | Failed | 38/0 |
| Sodium Hydroxymethyl Sulfinate | 25/0 | 86/0 | *55*/*0* | |
| Tris (Hydroxymethyl) nitromethane 1^{st} Version | 66/2 | 58/0 | 50/0 | |
| Tris (Hydroxymethyl) nitromethane 2^{nd} Version | 67/3 | 58/0 | 81/2 | 64/1 |
| Tris (Hydroxymethyl) nitromethane/Phloroglucinol | 95/5 | 92/3 | 113/3 | 91/3 |
| LH1000 1 Day Aged | 50/1 | Failed | 49/0 | 53/0 |
| LH1000 5 Day Aged | 45/1 | Failed | 42/0 | 58/0 |
| LH1000 11 Day Aged | 46/1 | Failed | 44/0 | 62/0 |
| Furfural | 103/5 | *76*/*1* | 87/3 | |
| 62Salicylaldehyde | 34/0 | 64/0 | 29/0 | |
| Vanillin 3^{rd} Version | 23/0 | 92/0 | 51/0 | 36/0 |
| p-Nitrobenzaldehyde | 43/1 | 62/0 | 58/0 | 35/0 |
| p-Anisaldehyde | 25/0 | 68/0 | 53/0 | 40/0 |

| | | | | |
|---|---|---|---|---|
| ¹ Standard rubber ply compounds: Plycoat 4 is a standard passenger compound, plycoat 5 is a bias aircraft tire plycoat, and plycoat 6 is a standard race tire plycoat. Plycoat 3 as in Table VI. | | | | |

**Table VIII**

| PET 120 C Strip Adhesion to Standard Carcass Plycoat Rubber Compounds' | | | |
|---|---|---|---|
| Adhesive | Plycoat 1 Relative Force/ RC rating (0-5 scale) | Plycoat 2 Relative Force/ RC rating (0-5 scale) | Plycoat 3 Relative Force/ RC rating (0-5 scale) |
| Control RF | 100/4.5 | 100/5 | 100/3 |
| Phloroglucinol 2^{nd} Version | 98/4.5 | 114/5 | 108/3 |
| Tannic Acid | 43/0 | 67/1 | |
| Tannic Acid/Phloroglucinol | 77/4 | 88/4 | |
| Morin | 88/4.5 | 110/4.5 | 106/3 |
| Sesamol | 30/0 | *55*/*0* | 45/0 |
| Sodium Hydroxymethyl Sulfinate | 41/0 | 64/0 | |
| Tris (Hydroxymethyl) nitromethane 1^{st} Version | 85/4 | 95/4 | |
| Tris (Hydroxymethyl) nitromethane 2^{nd} Version | 91/4.5 | 77/4.5 | 100/3 |
| Tris (Hydroxymethyl) nitromethane/Phloroglucinol | 96/5 | *110*/*5* | 102/5 |
| LH1000 1 Day Aged | 35/0 | 99/2 | 104/0 |
| LH1000 5 Day Aged | 60/1 | 106/3 | 98/0 |
| LH1000 11 Day Aged | 76/2 | 106/4 | 85/0 |
| Furfural | 94/4.5 | 108/5 | |
| Salicylaldehyde | 85/3.5 | 99/4 | |
| Vanillin 3^{rd} Version | 30/0 | 68/0 | 68/0 |
| p-Nitrobenzaldehyde | 84/4 | 108/4.5 | 116/4 |
| p-Anisaldehyde | 33/0 | 63/0 | 56/0 |

| | | | |
|---|---|---|---|
| ¹ Plycoats 1-3 as in Table VI. | | | |

More compositions matched controls in adhesion to PET than to rayon or nylon. One possible explanation is that for PET the subcoat provides the bonding to the fiber whereas in rayon and nylon the phenolic resin system (RFL or replacement) is the primary component for fiber bonding. Another possibility is that some of the resin systems may not crosslink sufficiently during room temperature aging and require higher treating temperatures during cord dipping to complete resin formation. PET has the highest process temperature of three cord types tested and so might provide the greatest possibility of further reaction during dipping.

Coat compounds were also found to have different results with PET cord. Many more formulations showed good results in plycoat 2 than in plycoat 1 or plycoat 3.

Adhesive aging time was only evaluated in the case of LH1000, which exhibited a pronounced increase in color as the adhesive was stored at room temperature. No change was found for rayon or nylon dipped cords, but the aged adhesive showed increases in either peel force or coverage for PET cords in plycoat 1 and plycoat 2 compounds. This indicates that there is potential for improved results from extended or higher temperature aging in some cases.

Phloroglucinol and tris(hydroxymethyl)nitromethane, which showed best results overall as individual replacements for resorcinol and formaldehyde, were then combined and assessed in the same fashion. Adhesion equal to or better than controls was found for fiber/compound combinations. It was observed that the combination of phloroglucinol and tris(hydroxymethyl)nitromethane gave better results overall than either phloroglucinol/formaldehyde or resorcinol/tris(hydroxymethyl)nitromethane adhesives. One possible explanation is that the higher potential reactivity of phloroglucinol changes the kinetics of resin formation such that the phloroglucinol/tris(hydroxymethyl)nitromethane is a closer match to the resorcinol/formaldehyde system.

## Claims

1. A rubber reinforcement adhesive comprising water and the reaction product of phloroglucinol and tris(hydroxymethyl)nitromethane.

2. The rubber reinforcement adhesive of claim 1, further comprising at least one rubber selected from styrene-butadiene rubber and vinylpyridine-styrene-butadiene rubber.

3. The rubber reinforcement adhesive of claim 1 or 2, wherein the molar ratio of tris(hydroxymethyl)nitromethane to phloroglucinol ranges from 0.5 to 1.5.

4. The rubber reinforcement adhesive of at least one of the previous claims, wherein the reaction product of phloroglucinol and tris(hydroxymethyl)nitromethane comprises from 5 to 40 parts by weight of the total solid weight in the adhesive.

5. The rubber reinforcement adhesive of claim 4, wherein the reaction product of phloroglucinol and tris(hydroxymethyl)nitromethane comprises from 10 to 28 parts by weight of the total solid weight in the adhesive.

6. The rubber reinforcement adhesive of claim 2, wherein the weight ratio of styrene-butadiene rubber to vinylpyridine-styrene-butadiene rubber ranges from 1:2 to 2:1.

7. A reinforced rubber composition comprising a polymer reinforcement cord contacting a rubber composition, the polymer reinforcement cord comprising an adhesive treatment dispersed on the surface thereof, wherein the adhesive treatment is or comprises the rubber reinforcement adhesive in accordance with at least one of the claims 1 to 6.

8. The reinforced rubber composition of claim 7, wherein the polymer reinforcement cord is selected from rayon cords, nylon cords, polyester cords, aramid cords, and hybrid cords prepared from combinations of different yarns.

9. The reinforced rubber composition of claim 7, wherein the polymer reinforcement cord is a polyethylene terephthalate cord.

10. The reinforced rubber composition of at least one of the claims 7 to 9, wherein the reaction product of phloroglucinol and tris(hydroxymethyl)nitromethane comprises from 5 to 40 parts by weight, alternatively from 10 to 28 parts by weight, of the adhesive treatment.

11. A pneumatic tire comprising the reinforced rubber composition of at least one of the claims 7 to 10.

12. A method of making a pneumatic tire, the method comprising the step of treating a polymer reinforcement cord with a rubber reinforcement adhesive comprising water and the reaction product of phloroglucinol and tris(hydroxymethyl)nitromethane to produce a treated reinforcement cord, and contacting the treated reinforcement cord with a rubber composition.

## Patentansprüche

1. Klebstoff zur Verstärkung von Kautschuk, der Wasser und das Reaktionsprodukt von Phloroglucinol und Tris(hydroxymethyl)nitromethan umfasst.

2. Klebstoff zur Verstärkung von Kautschuk nach Anspruch 1, der weiterhin mindestens einen Kautschuk umfasst, der aus Styrol-Butadien-Kautschuk und Vinylpyridin-Styrol-Butadien-Kautschuk ausgewählt ist.

3. Klebstoff zur Verstärkung von Kautschuk nach Anspruch 1 oder 2, wobei das Molverhältnis von Tris(hydroxymethyl)nitromethan zu Phloroglucinol in dem Bereich von 0,5 bis 1,5 liegt.

4. Klebstoff zur Verstärkung von Kautschuk nach mindestens einem der vorhergehenden Ansprüche, wobei das Reaktionsprodukt von Phloroglucinol und Tris(hydroxymethyl)nitromethan 5 bis 40 Gewichtsteile des Gewichts der gesamten Feststoffe in dem Klebstoff umfasst.

5. Klebstoff zur Verstärkung von Kautschuk nach Anspruch 4, wobei das Reaktionsprodukt von Phloroglucinol und Tris(hydroxymethyl)nitromethan 10 bis 28 Gewichtsteile des Gewichts der gesamten Feststoffe in dem Klebstoff umfasst.

6. Klebstoff zur Verstärkung von Kautschuk nach Anspruch 2, wobei das Gewichtsverhältnis von Styrol-Butadien-Kautschuk zu Vinylpyridin-Styrol-Butadien-Kautschuk in dem Bereich von 1:2 bis 2:1 liegt.

7. Zusammensetzung auf der Basis von verstärktem Kautschuk, die einen polymeren Verstärkungskord umfasst, der mit einer Kautschukzusammensetzung in Kontakt kommt, wobei der polymere Verstärkungskord eine Klebstoffbehandlung umfasst, die auf seiner Oberfläche dispergiert ist; wobei die Klebstoffbehandlung den Klebstoff zur Verstärkung des Kautschuks darstellt oder diesen umfasst, gemäß mindestens einem der Ansprüche 1 bis 6.

8. Zusammensetzung auf der Basis von verstärktem Kautschuk nach Anspruch 7, wobei der polymere Verstärkungskord aus Rayonkorden, Nylonkorden, Polyesterkorden, Aramidkorden und Hybridkorden, die aus Kombinationen verschiedener Garne hergestellt werden, ausgewählt ist.

9. Zusammensetzung auf der Basis von verstärktem Kautschuk nach Anspruch 7, wobei der polymere Verstärkungskord ein Kord auf der Basis von Polyethylenterephthalat ist.

10. Zusammensetzung auf der Basis von verstärktem Kautschuk nach mindestens einem der Ansprüche 7 bis 9, wobei das Reaktionsprodukt von Phloroglucinol und Tris(hydroxymethyl) nitromethan 5 bis 40 Gewichtsteile, alternativ 10 bis 20 Gewichtsteile, der Klebstoffbehandlung umfasst.

11. Luftreifen, der die Zusammensetzung auf der Basis von verstärktem Kautschuk nach mindestens einem der Ansprüche 7 bis 10 umfasst.

12. Verfahren zur Herstellung eines Reifens, wobei das Verfahren den folgenden Schritt umfasst: das Behandeln eines polymeren Verstärkungskords mit einem Klebstoff zur Verstärkung des Kautschuks, der Wasser und das Reaktionsprodukt von Phloroglucinol und Tris(hydroxymethyl)nitromethan umfasst, um einen behandelten Verstärkungskord zu erzielen, und das in Kontakt bringen von dem behandelten Verstärkungskord mit einer Kautschukzusammensetzung.

## Revendications

1. Adhésif pour le renforcement du caoutchouc, qui comprend de l'eau et le produit réactionnel de phloroglucinol et du tris(hydroxyméthyl) nitrométhane.

2. Adhésif pour le renforcement du caoutchouc selon la revendication 1, qui comprend en outre au moins un caoutchouc qui est choisi parmi un caoutchouc de styrène-butadiène et un caoutchouc de vinylpyridine-styrène-butadiène.

3. Adhésif pour le renforcement du caoutchouc selon la revendication 1 ou 2, dans lequel le rapport molaire du tris(hydroxyméthyl)nitrométhane au phloroglucinol se situe dans la plage allant de 0,5 à 1,5.

4. Adhésif pour le renforcement du caoutchouc selon au moins une des revendications précédentes, dans lequel le produit réactionnel du phloroglucinol et du tris(hydroxyméthyl)nitrométhane comprend de 5 à 40 parties en poids du poids des matières solides totales dans l'adhésif.

5. Adhésif pour le renforcement du caoutchouc selon la revendication 4, dans lequel le produit réactionnel du phloroglucinol et du tris(hydroxyméthyl)nitrométhane comprend de 10 à 28 parties en poids du poids des matières solides totales dans l'adhésif.

6. Adhésif pour le renforcement du caoutchouc selon la revendication 2, dans lequel le rapport pondéral du caoutchouc de styrène-butadiène au caoutchouc de vinylpyridine-styrène-butadiène se situe dans la plage allant de 1:2 à 2:1.

7. Composition à base de caoutchouc renforcé qui comprend un câblé de renforcement polymère qui entre en contact avec une composition à base de caoutchouc, le câblé de renforcement polymère comprenant un traitement par adhésif dispersé à sa surface ; dans laquelle le traitement par adhésif représente l'adhésif pour le renforcement du caoutchouc ou comprend ce dernier, en conformité avec au moins une des revendications 1 à 6.

8. Composition à base de caoutchouc renforcé selon la revendication 7, dans laquelle le câblé de renforcement polymère est choisi parmi des câblés en rayonne, des câblés en nylon, des câblés en polyester, des câblés en aramide, et des câblés hybrides que l'on prépare à partir de combinaisons de différents fils.

9. Composition à base de caoutchouc renforcé selon la revendication 7, dans laquelle le câblé de renforcement polymère est un câblé à base de polyéthylène téréphtalate.

10. Composition à base de caoutchouc renforcé selon au moins une des revendications 7 à 9, dans lequel le produit réactionnel du phloroglucinol et du tris(hydroxyméthyl)nitrométhane comprend de 5 à 40 parties en poids, en variante de 10 à 20 parties en poids du traitement par adhésif.

11. Bandage pneumatique qui comprend la composition à base de caoutchouc renforcé selon au moins une des revendications 7 à 10.

12. Procédé de confection d'un bandage pneumatique, le procédé comprenant l'étape dans laquelle on traite un câblé de renforcement polymère avec un adhésif pour le renforcement du caoutchouc qui comprend de l'eau et le produit réactionnel de phloroglucinol et du tris(hydroxyméthyl)nitrométhane afin d'obtenir un câblé de renforcement qui a été traité, et dans lequel on met le câblé de renforcement qui a été traité en contact avec une composition à base de caoutchouc.
